# EUROPEAN PATENT APPLICATION

(11) **EP 2 942 172 A1**
(43) Date of publication of application: **11.11.2015**
(21) Application number: 15382233.3
(22) Date of filing: 06.05.2015
(51) Int. Cl.: B28C 5/40, E01C 7/35, E01C 9/00, C08L 77/00, C08L 95/00

(54) **BITUMINOUS COMPOSITION AND USE THEREOF TO REDUCE VIBRATIONS, NOISE AND AS A MIXTURE TO PREVENT FISSURES AND THE UPWARD SPREAD OF FISSURES**

(30) Priority: 06.05.2014 ES 201430661
(71) Applicant: Aglomerados Los Serranos, S.A., 03203 Elche (Alicante) (ES)
(72) Inventor: VERDU ARACIL, Francisco Javier, 03001 Alicante (ES); GRIÑAN RAMIS, Eduardo Jose, 03003 Alicante (ES); BERENGUER PRIETO, Jose Manuel, 03680 Aspe (Alicante) (ES); NOHALES HERRAIZ, Cesar, 46701 Gandia (Valencia) (ES); NAVARRO PARDO, Julian, 03203 Elche (Alicante) (ES)
(74) Representative: Durán-Corretjer, S.L.P.

(57) **Abstract**

Bituminous composition and use thereof to reduce vibrations, noise and as a mixture to prevent fissures and the upward spread of fissures

The invention pertains to the civil engineering field and refers to a new bituminous composition containing aggregates, binding products and nylon, used in the construction of any layer forming part of a railroad or highway structure. Said composition, apart from having the proper structural properties for its use in railroad tracks and highways, it has improved properties as to the reduction of vibration and noise, as well as a suitable anticrack mix and also to prevent the spread of cracks.

## Description

The present invention refers to the field of civil engineering and relates to a novel composition of a bituminous material used in the construction of any layer that forms part of a railway or road structure. As well as having suitable structural properties for use in railway tracks or roads, said composition has improved properties regarding the reduction of vibrations and noise, and as a mixture to prevent fissures and the spread of fissures to upper layers.

The sub-ballast is the layer situated beneath the ballast and above the bed of a rail track, which has the basic function of preventing damage to the bed by erosion, draining rainwater, improving load distribution and keeping the ballast away from extraneous elements. The granular sub-ballast used conventionally has numerous behavioural and procurement problems which make necessary the development of new materials to replace it.

Among other drawbacks, conventional granular sub-ballast provides a lower modulus of rigidity, and therefore requires greater thickness to provide suitable load-bearing capacity and may be subject to settling as well as possibly presenting isolated problems in providing impermeability and separation between the layer of ballast and the bed, which sometimes results in contamination between the two layers; in addition, the large quantities of material needed and the stringent requirements on granulometry mean that it may be in short supply, there are few licensed quarries, as well as having significant environmental impact, both visually and during transport.

To overcome the above-mentioned problems with conventional granular sub-ballast, bituminous mixtures have been disclosed which basically are made up of a combination of aggregate and a hydrocarbon derived binder. Generally, the elements that make up this type of bituminous composition are coarse aggregate, mineral dust and a bituminous binder. However, depending on the type and proportion of the materials used in the bituminous compositions, such as the huge variety of types of polymer, for example, very different properties may be obtained in the final bituminous composition.

Moreover, nowadays the general trend is to use artificial materials instead of road materials obtained from quarries, such as traditional granular sub-ballast or rock ballast. It is very advantageous when planning rail works not to have to depend on the availability of these types of natural material from quarries, which are becoming increasingly scarce and unavailable, and it is also better from an environmental point of view. Furthermore, this substitution helps reduce transport costs considerably if a mobile asphalt production plant is installed near the track.

As well as the above considerations, it is known that the characteristics of bituminous mixtures make them a suitable product for use in railway tracks. It has adequate deformability in the presence of differential settling rates originating from the lower granular materials and its high impermeability gives it properties that provide a compromise solution as compared to the use of concrete and granular materials.

Finally, nylon waste, for example, stands out clearly among the different environmental concerns that must be resolved at present and it is becoming increasingly necessary to reuse said waste material. An example causing great concern is nylon waste from, among other sources, discarded carpets and nylon from waste tyres.

The present invention therefore discloses a novel composition of a bituminous material which is suitable for use as sub-ballast in railway tracks or any layer that forms part of a road. The inventors discovered unexpectedly that said bituminous material composition, in addition to suitable structural properties for use as sub-ballast, has properties that allow vibrations and noise to be reduced significantly and also has fissure-resistant properties and properties that help prevent the upward spread of fissures.

The bituminous material of the present invention has structural strength, rigidity, load-bearing capacity, resistance to permanent plastic deformation after a given number of cycles, fatigue resistance, durability, adhesiveness and impermeability. It can have also a role in the propagation of vibrations, by mitigating their effect owing to the rheology provided by the nylon and the viscous and resilient nature of asphalt as a material.

The composition of the present invention achieves three basic advantages simultaneously:
- It takes advantage of the characteristics that nylon provides in bituminous mixtures, to achieve suitable rheology focused on vibration and noise attenuation and its fissure-resistant properties and properties that help prevent the upward spread of fissures.
- It avoids the use of quarried natural materials that are becoming scarcer these days. These could be the ballast rocks and the granular material that forms the sub-ballast layer, for example.
- It is possible to reuse waste nylon fibres to form part of the bituminous material to achieve a better rheology and at the same time produce a construction material that is environment friendly.

Furthermore, the option of reusing nylon as a polymer additive in the present invention is very appropriate. It lowers the cost of the bituminous mixture of the present invention considerably compared with the conventional bituminous mixtures of the prior art.

As used in the present invention, the term "nylon" refers to a synthetic polymer belonging to the polyamide group. The best-known commercial fibres are nylon 6 and nylon 6.6, but they also include other polyamides such as nylon 4, 7, 11, 12, 6.10, 6.4 and PACM 12.

The bituminous composition of the present invention comprises:
- Aggregate: 90-98 % by weight of the total composition;
- Binder: 2-15 % by weight of the total composition;
- Nylon: less than or equal to 5 % by weight of the total composition or less than or equal to 40 % by weight of the weight of the binder;
   characterised in that:
   said binder is selected from asphaltic bitumens with a penetration of 10/20, 20/35, 35/50, 50/70, 70/100 or greater, up to 300 tenths of a millimetre, or any other penetration included in the above range, and physically or chemically modified bitumens.

The nylon in the bituminous composition of the present invention can be virgin fibre, that is, fibre that has not been used before or it may be recycled fibre from a source of waste products made of nylon, such as old nylon carpets. The nylon used may also be in the form of fibres of different lengths.

The type of asphaltic bitumen used as a binder in the composition of the present invention is selected according to the required degree of vibration and noise mitigation. The term aggregate as used in the present invention refers to the granular material used as a raw material, mainly in construction. The aggregates that can be used in the bituminous composition of the present invention must comply with the various regulations and normal practice (for example, UNE-EN 933-2). The granulometry of said aggregates can be considered divided in two grades: particles that are held in a 2 mm sieve (coarse fraction) and particles that are not held in a 2 mm sieve but held in a 0.063 mm sieve (fine fraction). Depending on the degree of compaction required for the layer of bituminous composition of the present invention, the coarse fraction, the fine fraction or a mixture of both aggregate fractions can be used.

The bituminous compositions prepared according to the present invention comply with the regulations produced by the European Standardisation Organisations (ESO) for this field. The European regulations referred to are:
- European standard EN 13108-1 for bituminous concrete, together with the corresponding amendments.
- European standard EN 13108-2 for bituminous mixtures for thin layers, together with the corresponding amendments.
- European standard EN 13108-3 for type SA bituminous mixtures, together with the corresponding amendments.
- European standard EN 13108-4 for type HRA bituminous mixtures, together with the corresponding amendments.
- European standard EN 13108-5 for type SMA bituminous mixtures, together with the corresponding amendments.
- European standard EN 13108-6 for bituminous mastics, together with the corresponding amendments.
- European standard EN 13108-7 for bituminous drainage mixtures, together with the corresponding amendments.
- European standard EN 13108-8 for recycled bituminous mixtures, together with the corresponding amendments.

In addition, it complies with all the equivalent official versions of the above-mentioned standards brought together by the various bodies that issue domestic standards. Clearly, the official versions issued by the Spanish Association for Standardisation and Certification (AENOR) have been taken into account in the present invention.

These UNE-EN standards are:
- UNE-EN 13108-1, together with the corresponding amendments.
- UNE-EN 13108-2, together with the corresponding amendments.
- UNE-EN 13108-3, together with the corresponding amendments.
- UNE-EN 13108-4, together with the corresponding amendments.
- UNE-EN 13108-5, together with the corresponding amendments.
- UNE-EN 13108-6, together with the corresponding amendments.
- UNE-EN 13108-7, together with the corresponding amendments.
- UNE-EN 13108-8, together with the corresponding amendments.

The bituminous composition according to the present invention can be prepared using the usual devices for preparing conventional bituminous mixtures, known to the person skilled in the art. The installation must be capable of heating both the aggregate and the binder, and of measuring and mixing the components in the correct proportion.

As an exception to the usual preparation method, it is possible to introduce the polymer material by two different methods known as the wet route and the dry route. The difference between the two methods lies in the time at which the polymer material is introduced into the composition. In the wet route, the nylon is incorporated with the binder (asphaltic bitumen) beforehand, in a kneading machine, for example. In the dry route, however, the particles of polymer material are introduced directly into the mixer, together with the aggregate.

The general method for preparing the bituminous composition according to the present invention comprises the steps of transporting the aggregate from the hoppers to the dryer, drying the aggregate, heating the aggregate to a predetermined temperature, adding the nylon to the mixer or kneading machine as appropriate (dry route or wet route) in the established correct proportions by means of a silo with a measuring scale and kneading all the components at a temperature that could, depending on the type of mixture, be between 60 and 200 °C.

The properties of the bitumen are being improved by the interaction of the polymer material with the bitumen. The measured amount of bitumen has to be greater than in a conventional mixture owing to the presence of the nylon, as it offers a greater specific surface area for coating by the bitumen.

As mentioned earlier, the present invention also relates to the use of the bituminous composition for the construction of structures for public works, including airports, ports and reservoirs.

In addition, the bituminous composition of the present invention can be used in the construction of any layer that forms part of a railway or road structure. For example, in a railway track it can be used either on the surface to support the sleepers, as a matrix in which the sleepers or the rails are embedded, as a base, sub-base, layer or sub-layer of the road or track or as any other layer below the sub-ballast layer, the purpose of which is to attenuate rail track noise and vibrations, or other requirements focused on structural operation.

Moreover, it is also envisaged that the bituminous composition of the present invention can be used in two locations simultaneously within the same section of track. It would therefore be possible to increase its ability to attenuate noise and vibrations. Its ability to absorb noise and vibrations is also apparent if the material is arranged in contact with the surface because, unlike concrete, it has a rougher surface which is capable of reducing external conditions in the form of noise by means of the absorption mechanism.

Finally, it should be noted that the bituminous composition according to the present invention has fissure-resistant properties and properties that help prevent the upward spread of fissures.

Accordingly the present invention also relates to the use of the bituminous composition to reduce noise and vibrations in public works, railway tracks or roads. In addition, it can be used to reduce noise and vibrations in the construction of airports, ports and reservoirs. The present invention also relates to the use of the bituminous composition as a mixture to prevent fissures and reduce the upward spread of fissures.

The bituminous composition of the present invention can be spread using any conventional implementation method known to the person skilled in the art. However, said spreading may vary depending on the track or road layer in which said bituminous composition is used or the noise range or vibration frequency over which the reduction is required. These two factors primarily affect the thickness of the mixture to be spread which in turn affects the number of times the material needs to be spread.

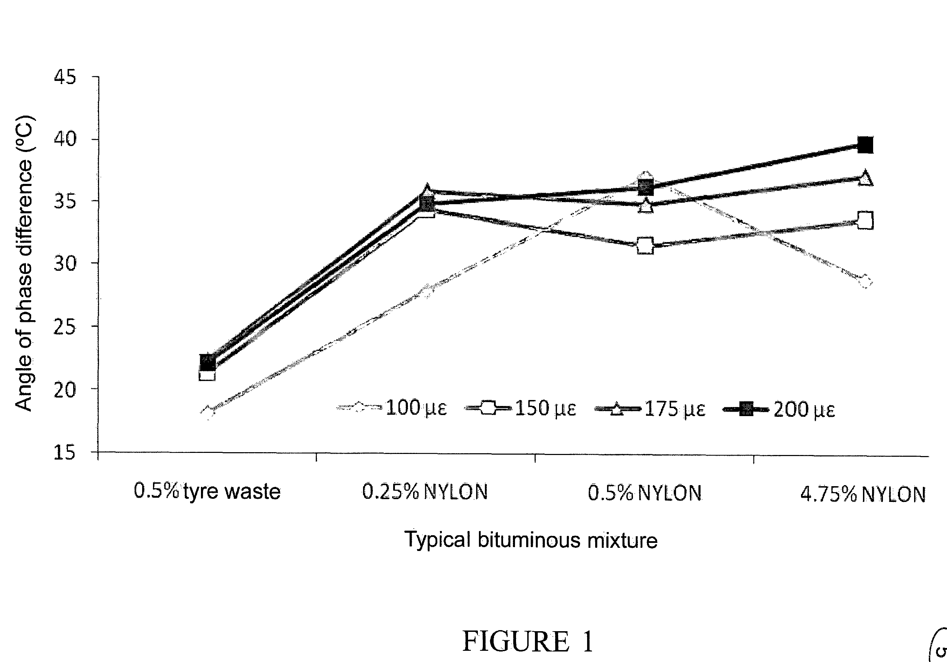

The present invention is described in more detail below with reference to various embodiments and a drawing (Fig. 1) showing the improvements in the angle of phase difference obtained (at 20 °C) and the load application frequency (30 Hz) of compositions prepared according to the present invention. These examples, however, are not intended to limit the scope of the present invention, but to illustrate the description thereof.

### EXAMPLES

### Example 1

### Preparation of a bituminous composition according to the present invention (composition 1)

A bituminous composition according to the present invention was prepared by mixing, firstly, aggregate (93.75 % by weight), bitumen penetration grade 50/70 (6 % by weight) and nylon (0.25 % by weight). The granulometry of the aggregate of composition 1, and the content of each granulometric fraction, is shown in the following table.

| Granulometric fraction (mm) | % by weight compared with total mixture |
|---|---|
| 11.2 - 16 | 2.63 |
| 8 - 11.2 | 16.59 |
| 5.6 - 8 | 37.78 |
| 4 - 5.6 | 8.53 |
| 2 - 4 | 4.59 |
| 0.5 - 2 | 10.78 |
| 0.063 - 0.5 | 5.81 |
| < 0.063 | 7.03 |

### Example 2. Preparation of a bituminous composition according to the present invention (composition 2)

A bituminous composition according to the present invention was prepared by mixing, firstly, aggregate (93.25 % by weight), bitumen penetration grade 50/70 (6 % by weight) and nylon from waste materials (0.75 % by weight). The granulometry of the aggregate of composition 2 is shown in the following table.

| Granulometric fraction (mm) | % by weight compared with total mixture |
|---|---|
| 11.2 - 16 | 1.96 |
| 8 - 11.2 | 15.29 |
| 5.6 - 8 | 38.51 |
| 4 - 5.6 | 7.55 |
| 2 - 4 | 8.02 |
| 0.5 - 2 | 7.65 |
| 0.063 - 0.5 | 7.09 |
| < 0.063 | 7.18 |

### Example 3. Preparation of a bituminous composition according to the present invention (composition 3)

A bituminous composition according to the present invention was prepared by mixing, firstly, aggregate (89.25 % by weight), bitumen penetration grade 50/70 (6 % by weight) and recycled nylon from waste (4.75 % by weight). The granulometry of the aggregate of composition 3 is shown in the following table.

| Granulometric fraction (mm) | % by weight compared with total mixture |
|---|---|
| 11.2 - 16 | 1.87 |
| 8 - 11.2 | 14.64 |
| 5.6 - 8 | 36.86 |
| 4 - 5.6 | 7.23 |
| 2 - 4 | 7.68 |
| 0.5 - 2 | 7.32 |
| 0.063 - 0.5 | 6.78 |
| < 0.063 | 6.87 |

### Example 4. Comparison of noise/vibration reduction for a bituminous material enriched with tyre waste.

The noise or vibration attenuating characteristics of a bituminous mixture can be compared by analysing the angle of phase difference, which relates the viscous properties of the bituminous material to its resilient properties. The greater the angle of phase difference of a bituminous material, the higher the damping coefficient obtained. The noise and vibration reduction of a bituminous mixture enriched with tyre waste is greater because the angle of phase difference, and consequently the damping factor, is increased substantially.

For the bituminous mixtures prepared according to the present invention with the addition of different quantities of nylon to mixtures that have added waste tyre powder, the improvements in the angle of phase difference obtained under the same temperature conditions (20 °C) and load application frequency (30 Hz) are shown in Fig. 1.

### Example 5. Test for the ability to prevent upward spread

Whether fissures in a road surface laid over another fissured surface are reflected or spread upwards depends on the horizontal and vertical movements caused by traffic and the effects of heat. Thus, a more flexible road surface can resist higher stress levels without causing the mixture to form a continuing fracture.

Thus, the percentage of bitumen and the rheology of the mixture play a fundamental role. The current anti-upward-spread solutions which prevent fissure propagation use a high bitumen content which provides resilient characteristics without producing the excessive flexibility that would lead to high levels of permanent deformation. In the case of the mixtures prepared according to the present invention, actual complex moduli, phase angles and rigidity moduli were obtained, in accordance with standard UNE-EN 12697-26, under the same conditions (30 Hz, 150 µε, 175 µε, 200 µε and 20 °C), for three additions of nylon (0.25 % by weight, 0.5 % by weight and 4.75 % by weight), as shown in the table below:

| Added amount: nylon 0.25 % by weight. Bitumen 50/70: 6 % by weight | | |
|---|---|---|
| E* = 6139 (MPa) | | |
| 150 µε | φ=34.4° | E₁=5065.37 MPa |
| 175 µε | φ=35.9° | E₁=4972.85 MPa |
| 200 µε | φ=34.9° | E₁=5034.91 MPa |

| Added amount: nylon 0.50 % by weight. Bitumen 50/70: 6 % by weight | | |
|---|---|---|
| E* ₌ 7990 (MPa) | | |
| 150 µε | φ=31.6° | E₁=6805.30 MPa |
| 175 µε | φ=34.9° | E₁=6553.01 MPa |
| 200 µε | φ=36.3° | E₁=6439.37 MPa |

| Added amount: nylon 4.75 % by weight. Bitumen 50/70: 6 % by weight | | |
|---|---|---|
| E* = 7156 (MPa) | | |
| 150 µε | φ=33.7° | E₁=5953.46 MPa |
| 175 µε | φ=37.2° | E₁=5699.97 MPa |
| 200 µε | φ=39.8° | E₁=5497.84 MPa |

For comparison with the mixtures prepared according to the present invention, conventional mixtures were prepared using waste tyre powder in amounts of 0.5 % and 1 % by total weight and subjected to the same test conditions. The results shown in the following table were obtained.

| Added amount: tyre waste 0.5 % by weight. Bitumen 50/70: 4.7 % by weight | | |
|---|---|---|
| E* = 8264 (MPa) | | |
| 150 µε | φ=15.4° | E₁=7967 MPa |
| 175 µε | φ=19.7° | E₁=7780.31 MPa |
| 200 µε | φ=20.8° | E₁=7725.39 MPa |

| Added amount: tyre waste 1 % by weight. Bitumen 50/70: 5.5 % by weight | | |
|---|---|---|
| E* = 11934 (MPa) | | |
| 150 µε | φ=14.8° | E₁=11538.07 MPa |
| 175 µε | φ=21.9° | E₁=11072.8 MPa |
| 200 µε | φ=21.1° | E₁=11133.87 MPa |

In all cases, a more resilient material was obtained with mixtures prepared according to the present invention, which helps reduce fissure propagation or their replication from lower layers. Permanent deformation was also checked to ensure that the resilience of the material prepared according to the present invention does not lead to greater deformation.

For the mixtures prepared according to the present invention, with additions of nylon of 0.25 % by weight, 0.5 % by weight and 4.75 % by weight, the permanent deformation obtained was: 0.036 mm, 0.038 mm and 0.038 mm respectively.

As for the mixtures prepared with waste tyre powder, using amounts of 0.5 % by weight and 1 % by weight, the permanent deformation obtained was: 0.040 mm and 0.039 mm respectively.

It can be concluded that a material is produced that is more resilient to fissuration, with lower permanent deformation and high vibration/noise attenuation capacity, suitable for preventing the upward spread of fissures. Furthermore, by adding nylon, a reinforced three-dimensional internal microstructure can be produced in the mixture which reduces the possible propagation of fissures and increases the specific surface area offered to the binder, which allows the content thereof to be increased in the mixtures prepared according to the present invention.

Although the invention has been described with respect to preferred embodiments, these should not be considered as limiting the invention, which will be defined by the widest interpretation of the following claims.

## Claims

1. Bituminous composition which comprises:
- Aggregate: 90-98 % by weight of the total composition;
- Binder: 2-15 % by weight of the total composition;
- Nylon: less than or equal to 5 % by weight of the total composition or less than or equal to 40 % by weight of the weight of the binder;
**characterised in that**:
said binder is selected from asphaltic bitumens with a penetration of 10/20, 20/35, 35/50, 50/70, 70/100 or greater, up to 300 tenths of a millimetre, or any other penetration included in the above range, and physically or chemically modified bitumens.

2. Bituminous composition according to claim 1, **characterised in that** the nylon is virgin fibre.

3. Bituminous composition according to claim 1, **characterised in that** the nylon is recycled fibre from a source of waste products.

4. Bituminous composition according to claim 3, **characterised in that** the nylon is in the form of fibres of different lengths.

5. Bituminous composition according to any of the preceding claims, **characterised in that** the nylon has previously been wrapped with a filler to increase its weight.

6. Bituminous composition according to any of the preceding claims, **characterised in that** the nylon is in the form of pellets.

7. Use of the bituminous composition according to claims 1 to 6 for the construction of structures for public works.

8. Use of the bituminous composition according to claims 1 to 6 for the construction of airports, ports and reservoirs.

9. Use of the bituminous composition according to claims 1 to 6 for the construction of any layer that forms part of a railway structure.

10. Use of the bituminous composition according to claims 1 to 6 for the construction of any layer that forms part of a road.

11. Use of the bituminous composition according to claims 1 to 6 for the reduction of noise and vibrations in a public work.

12. Use of the bituminous composition according to claims 1 to 6 for the reduction of noise and vibrations in the construction of airports, ports and reservoirs.

13. Use of the bituminous composition according to claims 1 to 6 for the reduction of noise and vibrations in a railway structure.

14. Use of the bituminous composition according to claim 1 to 6 for the reduction of noise and vibrations in a road.

15. Use of the bituminous composition according to claims 1 to 6 as a mixture to prevent fissures and the upward spread of fissures.
